# EUROPÄISCHE PATENTSCHRIFT

(11) **EP 1 211 016 B1**
(45) Veröffentlichungstag und Bekanntmachung des Hinweises auf die Patenterteilung: **28.01.2004**
(21) Anmeldenummer: 01116292.2
(22) Anmeldetag: 05.07.2001
(51) Int. Cl.: B23P 15/32, B23B 51/04, B23B 31/00

(54) **Tiefbohrwerkzeug und Verfahren zu seiner Herstellung**
Deep-hole drilling tool and method for manufacturing thereof
Outil à forer des trous profonds et son procédé de fabrication

(30) Priorität: 12.07.2000 DE 10033874
(43) Veröffentlichungstag der Anmeldung: 05.06.2002
(73) Patentinhaber: TBT Tiefbohrtechnik GmbH, 72581 Dettingen/Erms (DE)
(72) Erfinder: Nagel, Bernd, 72622 Nürtingen (DE)
(74) Vertreter: Patentanwälte Ruff, Wilhelm, Beier, Dauster & Partner

(56) Entgegenhaltungen:
- DE-U- 8 001 349
- DE-U- 29 716 377
- US-A- 4 981 328
- US-A- 5 160 090

## Beschreibung

### ANWENDUNGSGEBIET UND STAND DER TECHNIK

Die Erfindung betrifft ein Tiefbohrwerkzeug und ein Verfahren zur Herstellung eines Tiefbohrwerkzeugs.

Tiefbohrwerkzeuge bestehen hauptsächlich aus einem Bohrkopf und einem Bohrschaft. Diese werden stoffschlüssig, z. B. durch Löten, an ihren Stirnseiten miteinander verbunden. Das Bohrwerkzeug wird in eine Hülse eingespannt, die zur Übertragung des Drehmomentes von der Maschine auf das Bohrwerkzeug dient. Beim Bohren ist das Bohrwerkzeug und somit die Verbindungsstelle zwischen Bohrkopf und Bohrschaft verschiedenen Kräften, beispielsweise Scher-, Torsionskräften oder dergleichen ausgesetzt. Es hat sich daher als notwendig gezeigt, diese Verbindungsstelle in besonderer Weise auszubilden, so daß diese Kräfte ausgehalten werden können.

Aus der DE 297 16 377 ist ein Tiefbohrwerkzeug bekannt geworden, das im wesentlichen aus Bohrschaft und Bohrkopfeinheit besteht. Bohrschaft und Bohrkopfeinheit werden durch jeweils an ihren Stirnseiten ausgebildete ebene Kontaktflächen miteinander stoffschlüssig, beispielsweise durch Löten, verbunden. Die Verbindung kann auch mittels eines Adapters, beispielsweise einem scheibenförmigen Zwischenteil, erfolgen. Dabei werden die Stirnflächen an Bohrkopfeinheit und Bohrschaft mit den Stimflächen des Zwischenstückes verbunden.

### AUFGABE UND LÖSUNG

Es ist Aufgabe der Erfindung, ein Tiefbohrwerkzeug und ein Verfahren zur Herstellung eines Tiefbohrwerkzeuges zu schaffen, mit dem ein Bohrwerkzeug einfach und kostengünstig herstellbar ist. Dabei soll ein Bohrwerkzeug entstehen, das stabil ist und zuverlässig in allen denkbaren Einsatzgebieten handhabbar ist.

Diese Aufgabe wird durch ein Verfahren mit den Merkmalen des Anspruchs 1, sowie einem Bohrwerkzeug mit den Merkmalen des Anspruchs 5 gelöst.

Als Tiefbohrwerkzeuge werden im Sinne der Anmeldung alle im wesentlichen aus Bohrkopf und Bohrschaft bestehenden und beim Tiefbohren einsetzbaren Bohrvorrichtungen, wie Bohrmeißel o.dgl. verstanden, insbesondere Einlippen-Tiefbohrwerkzeuge.

Die konische Ausbildung des Sitzes bietet den Vorteil, daß sie zum einen schnell und kostengünstig, beispielsweise durch Fräsen, herstellbar ist und zum anderen selbstzentrierend wirkt, so daß Bohrkopf und Bohrschaft immer lagegenau und fluchtend zueinander ausrichtbar sind. Damit wird verhindert, daß beim Bohren unerwünschte und das Bohrwerkzeug stark beanspruchtende Scherkräfte auftreten, wie sie bei einer nicht-fluchtenden Anordnung von Bohrkopf und Bohrschaft auftreten könnten. Ferner hat der konische Sitz von Bohrschaft und Bohrkopf gegenüber einer geraden stimseitigen Verbindung eine vergrößerte Kontaktfläche, so daß eine stabilere Verbindung entsteht. Wie erwähnt, ist der konische Sitz durch Fräsen herstellbar. Als bevorzugtes Fräsverfahren wird dabei das Hochgeschwindigkeitsfräsen eingesetzt. Dabei kann beispielsweise eine HSC-Fräsmaschine eingesetzt werden, deren Spindel und der daran festgelegte Fräskopf sich mit einer Frequenz von 16.000 bis 24.000 Umdrehungen in der Minute dreht. Die Vorschubgeschwindigkeit kann dabei zwischen 10 m und 30 m in der Minute betragen. Der konische Sitz wird bevorzugt durch Rund- oder Wälzfräsen ausgebildet, dabei wälzt sich beispielsweise ein ebenfalls konisch ausgebildeter Fräskopf auf dem Bohrwerkzeug ab.

Ein anderes Verfahren zur Herstellung des konischen Sitzes ist das Erodieren, insbesondere das Funkenerodieren. Beim Funkenerodieren wird das Bohrwerkzeug als Werkstückelektrode in einer vorzugsweise nicht-leitenden Flüssigkeit (Dielektrikum) positioniert. Der Sitz wird dann insbesondere durch die zur Werkstückelektrode komplementäre formgebende Werkzeugelektrode der Funkenerodiermaschine hergestellt. Dabei wird die formgebende Werkzeugelektrode in der Werkstükelektrode, also im Bohrwerkzeug, abgebildet. Beim Erodieren wird lediglich die Werkzeugelektrode der Funkenerodiermaschine bewegt, das Bohrwerkzeug hingegen ist lagegenau in der Flüssigkeit positioniert. Somit kann ein gleichmäßiger und exakt ausgebildeter Sitz hergestellt werden.

Bei vergleichbaren spanabhebenden Bearbeitungsverfahren, wie Drehen oder Schleifen hingegen, wird das zu bearbeitende Werkstück eingespannt und führt vorzugsweise eine Rotationsbewegung durch. Durch Unwuchten im Werkstück, insbesondere durch dessen asymetrischen Querschnit aufgrund der Sicke, gerät dieses in Schwingung, so daß eine gleichmäßige Ausbildung des Sitzes nicht oder sehr schwer möglich ist. Beim Schleifen beispielsweise müßte auch wegen der Abnutzung der Schleifscheiben des öfteren abgerichtet werden, um einen genau passenden Sitz herzustellen. Femer ist die Schleifgeschwindigkeit nicht an jeder Stelle des Bohrwerkzeuges genau gleich groß, so daß unterschiedlich bearbeitete Bereiche entstehen. Vor allem bei Einlippen-Tiefbohrwerkzeugen mit Innensicke im Schaft mit radialen Flanken unterscheidet sich die Schleifgeschwindigkeit an den radialen Flanken von der am Umfang des Bohrwerkzeugs und geht in der Mitte (Sicke) gegen Null. Im Vergleich zum Drehen oder Schleifen kommt man beim Fräsen oder Funkenerodieren zudem mit wesentlich kürzeren Arbeitszeiten im Bereich von wenigen Minuten aus.

Das erfindungsgemäße Verfahren hat also den Vorteil, daß der Sitz konisch an Bohrwerkzeugen aus verschiedensten Werkstoffen hergestellt werden kann. Zu dessen Herstellung durch Abtragen, insbesondere durch Fräsen oder Erodieren wird eine relativ kurze Bearbeitungszeit im Bereich von wenigen Minuten benötigt, dennoch ist es möglich, den Sitz genauer und gleichmäßiger als beispielsweise beim Drehen oder Schleifen, auszubilden.

Beim Fräsen oder Erodieren wird die Oberfläche des Sitzes vorzugsweise rauh ausgebildet. Beim Fräsen ist die Rauhigkeit auf Fräsriefen zurückzuführen, die der Fräskopf der Fräsmaschine zurückläßt. Beim Erodieren kann die Oberfläche sogar mikrorauh, entsprechend einer feinen Sandstrahlung, ausgebildet sein. Sie kann dabei Verrippungen oder Verzahnungen aufweisen. Insbesondere beim Verlöten von Bohrschaft und Bohrkopf bilden diese Fräsriefen bzw. Verrippungen oder Verzahnungen einen guten Halt für das Lötmaterial.

Beim erfindungsgemäßen Verfahren wird zunächst der Sitz hergestellt, danach wird der Bohrkopf auf den Bohrschaft aufgesetzt und mit diesem stoffschlüssig, vorzugsweise durch Hartlöten, zusammengefügt.

Zum Fügen von Bohrkopf und Bohrschaft können alle bekannten Fügeverfahren, wie Schweißen, Löten oder dergleichen, eingesetzt werden, jedoch wird der Sitz vorzugsweise hartgelötet.

Der Sitz kann sowohl am Bohrschaft als auch am Bohrkopf hergestellt werden, jedoch wird er vorzugsweise am Bohrschaft mit dem erfindungsgemäßen Verfahren ausgebildet. Der Bohrschaft ist ein Hohlprofil, insbesondere ein Profilrohr mit einem Innenkanal und einer einen weiteren Kanal bildenden Innensicke, die zur Zufuhr von Kühlmittel, insbesondere Kühlschmiermittel, sowie zur Abfuhr von beim Bohren auftretenden Spänen verwendet werden. Würde dieser hohlprofilförmige Bohrschaft mit Innensicke durch Drehen oder Schleifen bearbeitet, würde er bei der Rotationsbewegung, die er während des Arbeitsprozesses ausführt, in Schwingung geraten, die eine gleichmäßige Bearbeitung des Sitzes erschweren. Beim Fräsen hingegen dreht sich der Fräskopf und das Bohrwerkzeug ist fest eingespannt. Auch beim Funkenerodieren dreht sich das Bohrwerkzeug nicht, so daß auch nicht rotationssymmetrische, hohlprofilförmige Bohrschäfte exakt und gleichmäßig bearbeitet werden können.

Beim erfindungsgemäßen Verfahren kann ein zum Sitz im Bohrschaft komplementäres, vorzugsweise konisches, Gegenstück am Bohrkopf ausgebildet werden. Das Gegenstück könnte auch durch Drehen oder Schleifen hergestellt werden, vorzugsweise wird es jedoch ebenfalls gefräst oder erodiert, was zu einer rauhen, insbesondere mikrorauhen Oberfläche des Bohrkopfes führt. Ein Erodieren ist insbesondere dann sinnvoll, wenn der Bohrkopf aus Hartmetall ist.

Beim erfindungsgemäßen Verfahren zur Herstellung des Bohrwerkzeuges können alle für das Bohren, insbesondere Tiefbohren, geeigneten Werkstoffe, wie Stahl, beispielsweise Schnellarbeitsstahl oder dergleichen, gefräst oder erodiert werden. Vorzugsweise wird der Bohrkopf jedoch aus Hartmetall hergestellt.

Die Erfindung umfaßt auch ein Bohrwerkzeug mit den Merkmalen des Anspruchs 5. Demnach ist am Bohrwerkzeug ein konisch ausgebildeter Sitz vorgesehen, der Teil einer stoffschlüssigen Verbindung zwischen Bohrkopf und Bohrschaft ist. Der Sitz kann durch Fräsen, insbesondere Hochgeschwindigkeitsfräsen, bevorzugt aber durch Erodieren, insbesondere Funkenerodieren, hergestellt sein. Der Sitz kann am Bohrschaft oder am Bohrkopf vorgesehen sein. Ein zum Sitz komplmentäres Gegenstück ist vorzugsweise ebenfalls konisch. Bevorzugt ist der Sitz im Bohrschaft durch die Stirnfläche der Wandung des Bohrschaftes gebildet. Die Stirnfläche des Bohrschaftes kann entsprechend dem Querschnitt eines Hohlprofiles aus einem kreisbogenförmigen Segment mit zwei jeweils an einem Ende des kreisbogenförmigen Segmentes anschließenden radialen, zur Bohrachse hin verlaufenden, miteinander verbundenen Segmenten gebildet sein.

Vorzugsweise ist die konisch ausgebildete Stirnfläche des Bohrschaftes zur Bohrachse hin geneigt. Der Flankenwinkel zwischen Stimfläche und Außenfläche des Bohrschaftes kann 10 bis 50°, insbesondere 20 bis 40°, betragen.

Die Oberfläche des Sitzes kann rauh sein, beispielsweise durch beim Fräsen entstandene Fräsriefen oder durch beim Erodieren entstandene Verrippungen oder Verzahnungen, insbesondere Trichter oder Krater. Die Verzahnungen können beispielsweise als eine Art Hirth-Verzahnung ausgebildet sein. Vor allem das Entstehen von Trichtern oder Kratem ist typisch bei funkenerodierten Oberflächen. Diese entstehen durch die Entladung der beiden Elektroden, also der Werkzeugelektrode und des Bohrwerkzeuges.

Das erfindungsgemäße Bohrwerkzeug zeichnet sich also durch einen selbstzentrierenden konischen Sitz zwischen Bohrschaft und Bohrkopf aus. Dadurch sind Bohrkopf und Bohrschaft stets fluchtend zueinander ausrichtbar, so daß beim Bohren keine Unwuchten auftreten können, die das Bohrergebnis belasten. Die Oberfläche eines oder beider Sitzes ist zudem aufgrund des Fräsens oder Erodierens mit Riefen bzw. Trichtern oder Kratern übersät, die einen verbesserten Halt des Lötmaterials und damit eine stabilere Verbindung von Bohrschaft und Bohrkopf als bei vergleichbaren Bearbeitungsverfahren, wie Drehen oder Schleifen, ergeben. Somit ist das erfindungsgemäße Bohrwerkzeug auch bei härtesten Bohrbedingungen zuverlässig einsetzbar.

Die vorstehenden und weitere Merkmale gehen außer aus den Ansprüchen auch aus der Beschreibung und den Zeichnungen hervor,

### KURZBESCHREIBUNG DER ZEICHNUNGEN

Das erfindungsgemäße Verfahren zur Herstellung eines Bohrwerkzeuges und ein Ausführungsbeispiel des Bohrwerkzeuges sind in den Zeichnungen dargestellt und werden im folgenden näher erläutert. In den Zeichnungen zeigen:
- Fig. 1: den Bohrschaft beim Erodieren in einer Erodiermaschine,
- Fig. 2: eine dreidimensionale Darstellung von Bohrschaft und Bohrkopf,
- Fig. 3: eine Seitenansicht und einen Querschnitt des Bohrschaftes,
- Fig. 4: eine Seitenansicht und einen Querschnitt des Bohrkopfes,
- Fig. 5: Bohrkopf und Bohrschaft unmittelbar vor dem Zusammenfügen,
- Fig. 6: Bohrkopf und Bohrschaft nach dem Zusammenfügen,
- Fig. 7: Verfahrensablauf des Herstellungs- bzw. Fügevorgangs von Bohrschaft und Bohrkopf, und
- Fig. 8: den Bohrschaft beim Fräsen in einer schematisch dargestellten Fräsmaschine.

### BESCHREIBUNG DES AUSFÜHRUNGSBEISPIELS

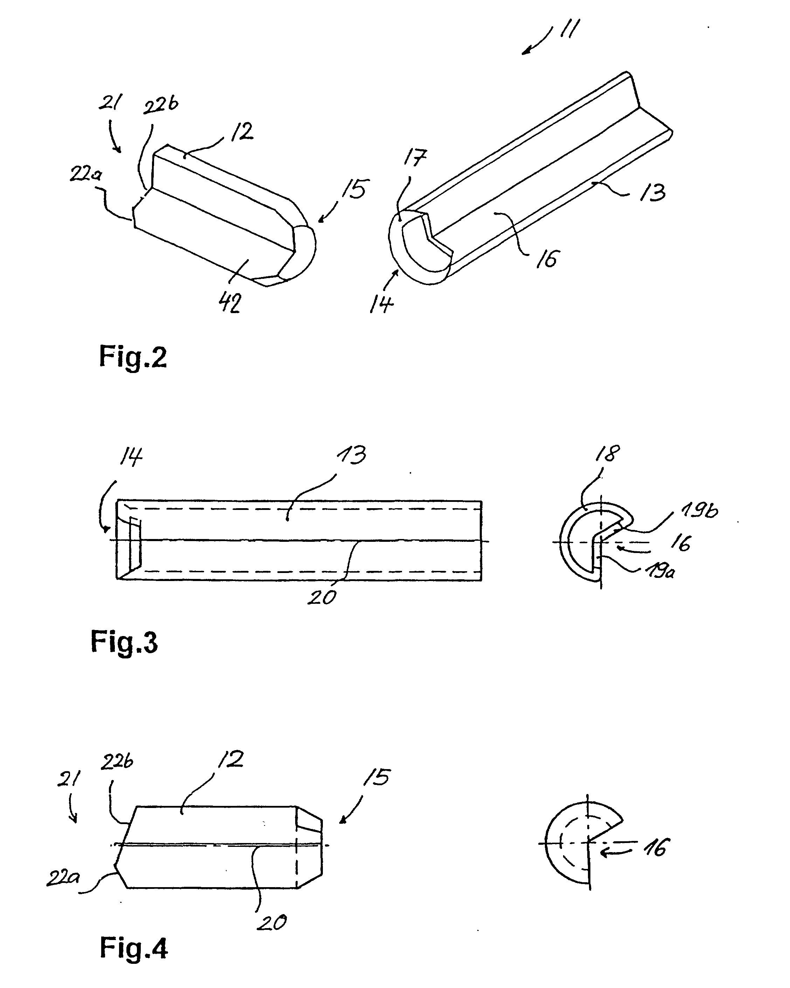

Das in Fig. 2 gezeigte Tiefbohrwerkzeug 11 besteht im wesentlichen aus einem Bohrkopf 12 und einem Bohrschaft 13. Der Bohrkopf 12 besteht meist aus Hartmetall oder ähnlichen metallischen oder keramischen Hartmaterialien und wird vorteilhaft aus einem Profilstab abgelängt, der vorzugsweise bereits die in Fig. 2 (linkes Bild) dargestellte Querschnittsform hat, nämlich eine Dreiviertel-Kreisform mit einer etwa bis zur Mittelachse gehenden V- bzw. tortenstückartigen Ausnehmung 42. Es ist aber auch möglich, den Bohrkopf aus einem Profil kreisrunden Querschnitts abzulängen und die Ausnehmung 42 einzuarbeiten, beispielsweise zu schleifen.

Der Bohrschaft 13 besteht aus einem Rohr mit entsprechender Querschnittsform. Es handelt sich um ein Rundrohr, das etwa auf einem Viertel seines Umfangs eine nach innen gerichtete V-förmige Sicke 16 aufweist, die bis an die Bohrachse 20 heranreicht. Der Bohrschaft besteht aus einem flexiblerem Werkstoff, beispielsweise aus Stahl. Er kann aus einem entsprechendem Profilrohr abgelenkt werden oder durch Einsicken (Senken, Stanzen oder dergleichen) aus einem Rundrohr hergestellt werden (siehe Figur 2 und 3). Zum Bohren wird das aus Bohrkopf 12 und Bohrschaft 13 bestehende Bohrwerkzeug 11 in eine Einspannhülse (nicht dargestellt) eingespannt, die zur Übertragung des Drehmomentes vom Motor auf das Bohrwerkzeug 11 dient.

Dargestellt ist ein Einlippen-Tiefbohrwerkzeug für das die Erfindung besonders bevorzugt ist. Ein Ende des Bohrkopfes 12 ist als Bohrschneide 21 ausgebildet. Die Bohrkopfspitze 21 hat eine schräg zur Bohrachse 20 verlaufende Nebenschneidkante 22b und eine mit dieser in einer Ebene liegende in einem Winkel von ca. 120° zur Nebenschneidkante 22b verlaufende, Hauptschneidkante 22a. Die Schneidkanten 22a, 22b treffen unter Bildung einer Spitze 21 exzentrisch zur Bohrachse 20 aufeinander. Das der Bohrkopfspitze 21 gegenüberliegende Ende des Bohrkopfes 12 ist konisch ausgebildet und bildet ein zum Sitz 14 am Bohrschaft 13 komplementäres Gegenstück 15. Das Gegenstück 15 wird durch Erodieren, Fräsen, Drehen oder Schleifen hergestellt. Die Konizität des Gegenstückes 15 kann beispielsweise durch einen Anfasvorgang beim Rundschleifen ausgebildet werden.

Der Bohrschaft 13 ist ein Profilrohr mit einem Innenkanal 40 und einer kreissegmentförmigen Ausnehmung als Innensicke 16, die bis zum Zentrum des Rohrs (Achse 20) reicht (siehe Fig. 2 und 4). Der Innenkanal dient zur Zufuhr von Kühlschmierstoffen in die Bohrzone und die Innensicke 16 dessen zu Abfuhr sowie von Späne aus der Bohrzone. Der Bohrschaft 13 weist an einem Ende einen konisch ausgebildeten Sitz 14 auf. Der Sitz 14 wird durch die Stirnfläche 17 des Bohrschaftes 13 gebildet. Entsprechend dem Querschnitt des Bohrschaftes 13 besteht die Stimfläche 17 aus einem kreisbogenförmigen Segment 18 mit zwei jeweils an ein Ende des kreisbogenförmigen Segmentes 18 anschließenden radialen, zur Bohrachse 20 hin verlaufenden, miteinander verbundenen Segmenten 19a, 19b. Der Sitz 14 im Bohrschaft 13 wird durch Fräsen oder Erodieren hergestellt, was später noch genauer beschrieben wird. Das Verhältnis von Schaftdurchmesser zu Schaftlänge beträgt 1:15 bis 1:250, insbesondere 1:30 bis 1:100. Die als Sitz 14 ausgebildete Stimfläche 17 ist in einem Winkel von 30° +/-10° zur Bohrachse 29 hin geneigt.

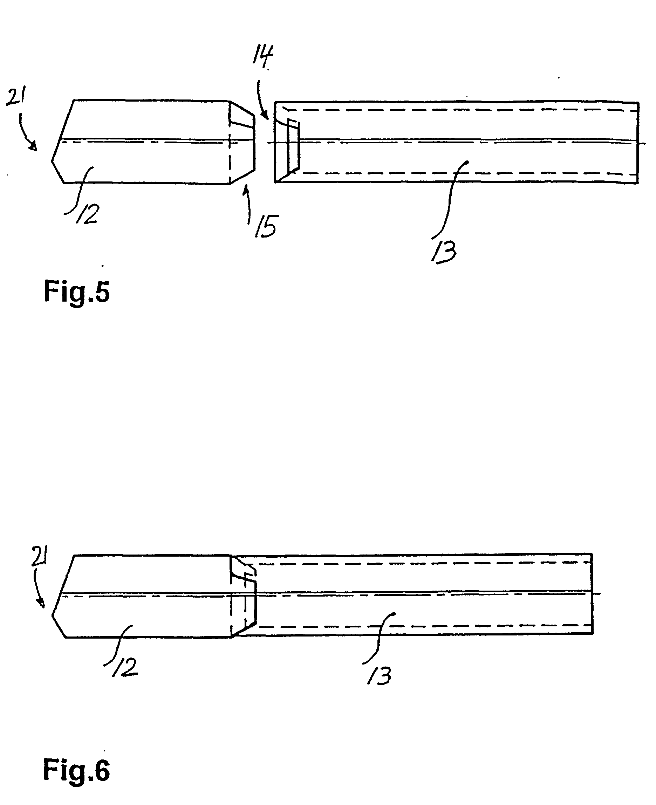

Zur Verbindung von Bohrkopf 12 und Bohrschaft 13 wird der konische Sitz 14 am Bohrschaft 13 und das konisch ausgebildete Gegenstück 15 am Bohrkopf 12 zusammengefügt (siehe Fig. 5 und Fig. 6). Als Fügeverfahren wird vorzugsweise Hartlöten verwendet. Dabei wird beispielsweise unter Verwendung eines in den Lötspalt (nicht dargestellt) gelegten Lötringes gelötet.

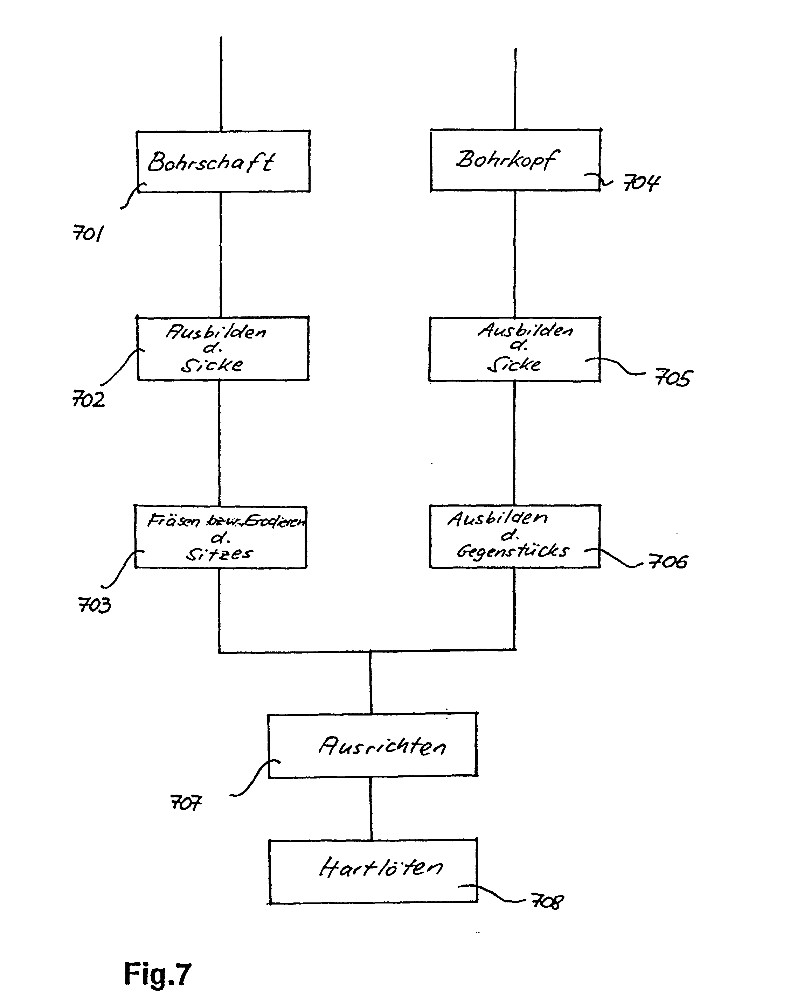

Gemäß dem in Fig. 7 dargestellten Verfahrensablauf werden zunächst der Bohrkopf 12 und der Bohrschaft 13 von entsprechenden Profilstangen bzw. -rohren abgelängt (Schritt 701, 704). Falls Rundmaterial verwendet wird, wird die Sicke 14 am Bohrschaft 13 und am Bohrkopf 12 ausgebildet (Schritt 702, 705). Dann wird am Bohrschaft 13 der Sitz 14 herausgefräst bzw. erodiert (Schritt 703) und am Bohrkopf 12 das Gegenstück 15 durch Schleifen, Fräsen oder Erodieren ausgebildet (Schritt 706). Bohrschaft 13 und Bohrkopf 12 werden dann lagegenau zueinander ausgerichtet (Schritt 707) und schließlich durch Hartlöten zusammengefügt (Schritt 708).

### FRÄSVERFAHREN

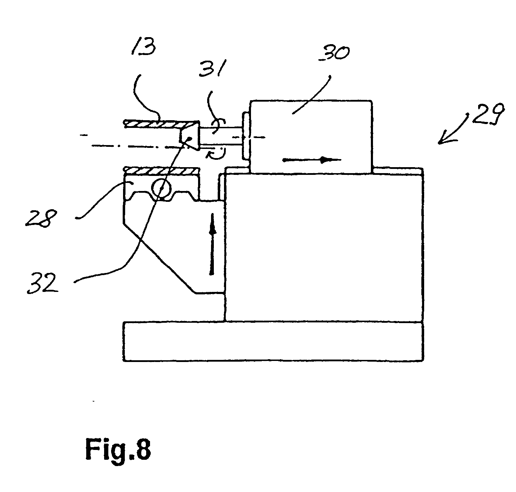

Der Sitz 14 am Bohrschaft 13 wird durch Hochgeschwindigkeitsfräsen hergestellt. Wie in Fig. 8 dargestellt, wird der Bohrschaft 13 zunächst auf einem vertikal beweglichen Arbeitstisch 28 einer Fräsmaschine 29 in Arbeitsposition gebracht. Als Fräsmaschine wird beispielsweise eine für das Hochgeschwindigkeitsfräsen einsetzbare Waagrecht-Konsolfräsmaschine mit waagrecht beweglichem Spindelkasten 30 verwendet. Die Spindel 31 der Fräsmaschine wird in Rotation versetzt und der konisch ausgebildete Fräskopf 32 wird in den Bohrschaft 13 gefahren. Die Spindel 31 ihrerseits führt ebenfalls eine Rotationsbewegung (nicht dargestellt) aus, so daß sich der rotierende Fräskopf 32 auf der Innenwandung des Bohrschaftes abwälzt und den konischen Sitz 14 ausbildet.

### ERODIERVERFAHREN

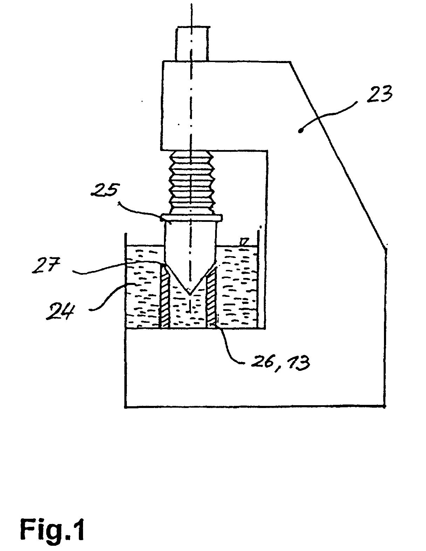

Ein anderes Verfahren zur Herstellung des Bohrschaftes ist das Funkenerodieren. Wie in Fig. 1 dargestellt, wird der Bohrschaft 13 zunächst in ein Elektrolytbad 24 einer Erodiermaschine 23 eingebracht. Als Elektroden werden zum einen der Bohrschaft 13 und zum anderen das Werkzeug 25, auch Pinole genannt, der Erodiermaschine 23 verwendet. Bohrschaft 13 und Werkzeug 25 werden so in Arbeitsposition gebracht, daß zwischen beiden ein Erodierspalt 27 verbleibt. Legt man nun an die Elektroden eine Spannung an, so kommt es nach Überschreiten der Durchschlagfestigkeit des Arbeitsmediums-vorgegeben durch den Elektrodenabstand und die Leitfähigkeit des Dielektrikums, also des Elektrolytbades - zur Bildung eines energiereichen Plasmakanals zwischen Bohrschaft 13 und Pinole 25. Beim Erodieren wird die konisch ausgebildete Pinole 25 im Bohrschaft praktisch abgeformt. Die Entladungen an den Elektroden erzeugen auf der Bohrschaftoberfläche Krater, deren Aneinanderreihung bzw. Überlagerung die für erodierte Werkstücke typische muldige Oberflächenstruktur ohne gerichtete Bearbeitungsspuren ergibt.

## Patentansprüche

1. Verfahren zur Herstellung eines Tiefbohrwerkzeugs (11), insbesondere eines Einlippen-Tiefbohrwerkzeugs, mit einem Bohrkopf (12) und einem hohlen Bohrschaft (13) sowie einem Sitz zwischen diesen mit Bohrkopfsitzflächen (15) und Bohrschaftsitzflächen (14), **dadurch gekennzeichnet, dass** zur lagegenauen und fluchtend ausgerichteten Verbindung von Bohrkopf (12) und Bohrschaft (13) durch Abtragen ein konisch ausgebildeter Sitz hergestellt wird und danach die konischen Sitzflächen (14, 15) stoffschlüssig miteinander verbunden werden.

2. Verfahren nach Anspruch 1, **dadurch gekennzeichnet, daß** zumindest die Bohrschaftsitzfläche (15) durch Fräsen, insbesondere durch Hochgeschwindigkeitsfräsen oder durch Erodieren, insbesondere durch Funkenerodieren, hergestellt wird.

3. Verfahren nach einem der vorhergehenden Ansprüche, **dadurch gekennzeichnet, daß** beim Herstellen des Sitzes die Oberfläche des Sitzes rauh, vorzugsweise mikrorauh, inbesondere mit Verrippungen oder Verzahnungen, ausgebildet wird.

4. Verfahren nach einem der vorhergehenden Ansprüche, **dadurch gekennzeichnet, daß** die Bohrschaftsitzfläche (14) in der Wandung des hohlprofilförmigen, mit einer Innensicke (16) versehenen Bohrschafts (13) ausgebildet wird, wobei insbesondere als ein zum Sitz (14) im Bohrschaft (13) komplementäres Gegenstück die Bohrkopfsitzfläche (15) ebenfalls konisch ausgebildet wird.

5. Tiefbohrwerkzeug mit einem Bohrkopf (12), einem hohlen Bohrschaft (13) und einem Sitz zwischen diesen mit einer Bohrkopfsitzfläche (15) und einer Bohrschaftsitzfläche (14), **dadurch gekennzeichnet, dass** in Bezug auf eine Bohrachse (20) der Sitz konisch ausgebildet ist und Teil einer stoffschlüssigen Verbindung zwischen Bohrkopf (12) und Bohrschaft (13) ist.

6. Bohrwerkzeug nach Anspruch 5, **dadurch gekennzeichnet, daß** die Oberfläche wenigstens einen der Sitzflächen (14, 15) rauh, vorzugsweise mikrorauh, beispielsweise durch Verrippungen oder Verzahnungen, insbesondere durch beim Erodieren entstandene Trichter oder Krater, ausgebildet ist.

7. Tiefbohrwerkzeug nach einem der Ansprüche 5 bis 6, **dadurch gekennzeichnet, daß** die Bohrschaftsitzfläche (14) in einer Stimfläche des hohlprofilförmigen, mit einer Innensicke (16) versehenen Bohrschaftes (13) vorgesehen ist und am Bohrkopf (12) als ein zur Bohrschaftsitzfläche (14) im Bohrschaft komplementäres, konisch ausgebildetes Gegenstück, die Bohrkopfsitzfläche (15) vorgesehen ist, wobei vorzugsweise die Stimfläche (17) entsprechend dem Querschnitt des Hohlprofils des Bohrschaftes (13) vorzugsweise aus einem kreisbogenförmigen Segment (18) mit zwei jeweils an ein Ende des kreisbogenförmigen Segments anschließenden radialen, zur Bohrachse hin verlaufenden, miteinander verbundenen Segmenten (19a, 19b) gebildet ist.

8. Tiefbohrwerkzeug nach einem der Ansprüche 6 bis 7, **dadurch gekennzeichnet, dass** die konisch ausgebildeten Sitzflächen (14, 15), in einem Flankenwinkel von 10° bis 50°, insbesondere von 20° bis 40°, gegen die Bohrachse (20) geneigt sind.

9. Tiefbohrwerkzeug nach einem der vorhergehenden Ansprüche 6 bis 8, **dadurch gekennzeichnet, dass** der hohle Bohrschaft einen Innenkanal (40) zur Kühl- und Schmiermittelzufuhr und der Bohrkopf eine mit diesem in Verbindung stehende Bohrung (41) aufweist und der Bohrkopf und der Bohrschaft einen als segmentförmige Sicke (16) ausgebildeten Span- und Kühlmittel-Ableitungskanal aufweist, der bis an die Bohrachse (20) heranreicht.

## Claims

1. Method for the manufacture of a deep drilling tool (11), particularly a single-flute deep drilling tool, having a drill head (12) and a hollow drill shank (13), as well as a seat between the same with drill head seat faces (15) and drill shank seat faces (14), **characterized in that** for the positionally accurate and aligned, oriented connection of the drill head (12) and drill shank (13) a conically constructed seat is produced by abrasion and then the conical seat faces (14, 15) are integrally joined together.

2. Method according to claim 1, **characterized in that** at least the drill shank seat face (15) is produced by milling, particularly by high speed milling, or by erosion, particularly spark erosion.

3. Method according to one of the preceding claims, **characterized in that** during the production of the seat, the surface of the seat is made rough, preferably microrough, particularly with rib or tooth systems.

4. Method according to one of the preceding claims, **characterized in that** the drill shank seat face (14) is formed in the wall of the hollow profile-like drill shank (13) provided with an inner crease (16) and in particular the drill head seat face (15) is also constructed conically as a complimentary counterpart to the seat (14) in drill shank (13).

5. Deep drilling tool having a drill head (12), a hollow drill shank (13) and a seat between the same with a drill head seat face (15) and a drill shank seat face (14), **characterized in that**, with reference to a drilling axis (20), the seat is conically constructed and forms part of an integral connection between drill head (12) and drill shank (13).

6. Drilling tool according to claim 5, **characterized in that** the surface of at least one of the seat faces (14, 15) is rough, preferably microrough, e.g. formed by rib or tooth systems, particularly by cones or craters caused during erosion.

7. Deep drilling tool according to one of the claims 5 and 6, **characterized in that** the drill shank face (14) is provided in an end surface of the hollow profile-like drill shank (13) having an inner crease (16) and the drill head seat face (15) is formed on the drill head (12) as a conically constructed counterpart complimentary to the drill shank seat face (14) in the drill shank and preferably the end surface (17) is formed in accordance with the cross-section of the hollow profile of the drill shank (13), preferably from an arcuate segment (18) with in each case two radial, interconnected segments (19a, 19b), running towards the drilling axis and in each case connected to one end of the arcuate segment.

8. Deep drilling tool according to one of the claims 6 and 7, **characterized in that** the conically constructed seat faces (14, 15) are inclined with an included angle of 10 to 50°, particularly 20 to 40° to the drilling axis (20).

9. Deep drilling tool according to one of the preceding claims 6 to 8, **characterized in that** the hollow drill shank has an inner channel (40) for coolant and lubricant supply and the drill head has a bore (41) connected therewith and the drill head and drill shank have a chip and coolant removal channel constructed as a segmental crease (16) extending up to the drilling axis (20).

## Revendications

1. Procédé de fabrication d'un outil de perçage profond (11), notamment d'un outil de perçage profond à une lèvre de coupe, avec une tête de perçage (12) et une tige de perçage (13) creuse ainsi qu'un siège entre celles-ci présentant des surfaces de siège de tête de perçage (15) et des surfaces de siège de tige de perçage (14), **caractérisé en ce que** pour le raccordement en position et en alignement précis de la tête de perçage (12) et de la tige de perçage (13) on produit d'abord un siège conique par des actions d'enlèvement et ensuite on raccorde entre elles les surfaces de siège (14, 15) coniques par engagement de matériaux.

2. Procédé d'après la revendication 1, **caractérisé en ce qu'**au moins la surface de siège de tige de perçage (15) est produite par fraisage, notamment par fraisage à très grande vitesse de coupe ou par érosion, notamment par étincelage.

3. Procédé d'après une des revendications précédentes, **caractérisé en ce que**, pendant le processus de fabrication du siège, la surface du siège est rendue rugueuse, de préférence microrugueuse, avec notamment des nervurages ou des endentements.

4. Procédé d'après une des revendications précédentes, **caractérisé en ce que** la surface de siège de tige de perçage (14) est formée dans la paroi de la tige de perçage (13) qui présente une forme de profil creux et qui est munie d'une moulure concave (16), la surface de siège de tête de perçage (15) étant réalisée également de manière conique notamment en tant que contre-élément complémentaire par rapport au siège (14) dans la tige de perçage (13).

5. Outil de perçage profond avec une tête de perçage (12), une tige de perçage (13) creuse et un siège entre celles-ci, présentant une surface de siège de tête de perçage (15) et une surface de siège de tige de perçage (14), **caractérisé en ce que** par rapport à un axe de perçage (20) le siège est réalisé de manière conique et il fait partie d'un raccord à engagement par matériaux entre la tête de perçage (12) et la tige de perçage (13).

6. Outil de perçage profond d'après la revendication 5, **caractérisé en ce que** la surface d'au moins une des surfaces de siège (14, 15) est réalisée de façon rugueuse, de préférence microrugueuse, ce qui est dû par exemple à des nervurages ou des endentements, notamment à des cônes et des cratères résultant du processus d'érosion.

7. Outil de perçage profond d'après une des revendications de 5 à 6, **caractérisé en ce que** la surface de siège de tige de perçage (14) est prévue dans une surface frontale de la tige de perçage (13), qui présente un profil creux et qui est munie d'une moulure concave (16), et que l'on prévoit la surface de siège de tête de perçage (15) auprès de la tête de perçage (12) en tant que contre-élément conique et complémentaire par rapport à la surface de siège de tige de perçage (14) dans la tige de perçage, la surface frontale (17) étant de préférence constituée, conformément à la section transversale du profil creux de la tige de perçage (13), de préférence d'un segment (18) en forme d'arc avec deux segments (19a, 19b) radiaux, qui font la suite respectivement à une extrémité du segment en forme d'arc, qui s'étendent en direction vers l'axe de perçage et qui sont raccordés entre eux.

8. Outil de perçage profond d'après une des revendications de 6 à 7, **caractérisé en ce que** les surfaces de siège (14, 15), réalisées de manière conique, sont inclinées sous un angle de flanc de 10° jusqu'à 50°, notamment de 20° jusqu'à 40° par rapport à l'axe de perçage (20).

9. Outil de perçage profond d'après une des revendications précédentes de 6 à 8, **caractérisé en ce que** la tige de perçage creuse présente un conduit intérieur (40) pour l'amenée des produits réfrigérants et lubrifiants et que la tête de perçage présente une forure (41) raccordée avec celui-ci et que la tête de perçage et la tige de perçage présentent un conduit de sortie pour les copeaux et le moyen de réfrigération réalisé en tant que moulure (16) présentant une forme de segment, conduit qui s'étend jusqu'à l'axe de perçage (20).
